# EUROPÄISCHE PATENTANMELDUNG

(11) **EP 2 993 744 A1**
(43) Veröffentlichungstag der Anmeldung: **09.03.2016**
(21) Anmeldenummer: 15002429.7
(22) Anmeldetag: 14.08.2015
(51) Int. Cl.: H01S 5/10, H01S 3/06

(54) **VOLLPOLYMERE MIKRORESONATOREN**

(30) Priorität: 02.09.2014 DE 102014012981
(71) Anmelder: Karlsruher Institut für Technologie, 76131 Karlsruhe (DE)
(72) Erfinder: Bog, Uwe, 76189 Karlsruhe (DE); Köber, Sebastian, 42799 Leichlingen (DE); Koos, Christian, 74936 Siegelsbach (DE); Wienhold, Tobias, 76133 Karlsruhe (DE); Wondimu, Sentayehu, 76133 Karlsruhe (DE)
(74) Vertreter: Müller-Boré & Partner Patentanwälte PartG mbB

(57) **Zusammenfassung**

Die vorliegende Erfindung betrifft einen Mikroresonator, insbesondere einen vollpolymeren Mikroresonator, auf einem Polymersockel (5), sowie ein Verfahren zur Herstellung des Mikroresonators und die Verwendung des Mikroresonators als Mikrolaser und/oder molekularer Sensor.

## Beschreibung

Die vorliegende Erfindung betrifft einen Mikroresonator, insbesondere einen vollpolymeren Mikroresonator, ein Verfahren zur Herstellung des Mikroresonators und die Verwendung des Mikroresonators als Mikrolaser und/oder molekularer Sensor.

Optische Mikroresonatoren, mit denen Licht auf kleinstem Raum für lange Zeit eingeschlossen werden kann, sind im Stand der Technik bekannt. Diese Mikroresonatoren können beispielsweise als Mikrolaser, insbesondere Mikrokelchlaser, verwendet werden und sind in großer Stückzahl und hoher Bauteildichte auf Chipbasis herstellbar. Diese Strukturen können unter anderem für den Einsatz als Laserlichtquelle in chipbasierten photonischen Systemen und als zentrales Detektionselement im Sinne eines Biosensors verwendet werden.

Herkömmliche Mikroresonatoren bestehen gewöhnlich aus einem Substrat, einem Sockel und dem eigentlichen Resonator. Der Resonator, beispielsweise in Kelchform, ist dabei über den Sockel mit dem Substrat, das gewöhnlich ein Siliciumwafer ist und als Träger dient, verbunden. Der Sockel besteht dabei stets aus dem gleichen Material wie das Substrat.

Mikrokelchresonatoren werden typischerweise gemäß früherer Beschreibungen durch ein vierstufiges Herstellungsverfahren gefertigt. Im ersten Schritt wird ein Siliciumwafer mit einem polymeren Fotolack mittels Schleuderbelackung (Spin-Coating) beschichtet, wobei der polymere Fotolack das Resonatormaterial bildet. In dieses Polymer werden im zweiten Schritt im Sinne eines positiven Fotolacks mittels fotolithographischer Verfahren Scheiben mit einem Durchmesser im zwei- bis dreistelligen Mikrometerbereich definiert. Nach einer geeigneten (nass)chemischen Entwicklung der belichteten Bereiche erhält man Polymerscheiben auf Silicium. Im dritten Schritt werden diese Scheiben mit Xenondifluorid (XeF₂) isotrop unterätzt, so dass die Randbereiche der Polymerscheiben freistehen und über den Sockel aus Silicium mit dem Siliciumwafer verbunden sind. Da die Randbereiche der Polymerscheiben frei stehen, wird eine verlustarme Lichtführung innerhalb der Scheiben ermöglicht. Im abschließenden vierten Prozessschritt wird die Gesamtstruktur über die Glasübergangstemperatur des Polymers erwärmt. Durch diesen thermischen Reflowprozess wird eine Verminderung nachteiliger Oberflächenrauheiten im Polymer erreicht. Weiterhin bildet sich aufgrund der Verringerung der Oberflächenenergie die charakteristische Kelchform der Kelchresonatoren aus. Die Resonatoroberfläche ist dann gewöhnlich defektfrei und ermöglicht optische Gütefaktoren größer 10⁷, die gewöhnlich durch intrinsische Eigenschaften des Polymers begrenzt sind.

Das vorstehende Herstellungsverfahren weist jedoch insbesondere im Hinblick auf die weitere Verwendung der Mikroresonatoren für die Biosensorik Nachteile auf. Die Verwendung von XeF₂ beschränkt das Herstellungsverfahren der Mikroresonatoren auf Silicium als Substratmaterial, wodurch die Anwendungsmöglichkeiten der Resonatoren als Biosensoren erheblich eingeschränkt sind. In diesem Anwendungsbereich wären beispielsweise transparente (z.B. für mikroskopische Anwendungen) und/oder mechanisch flexible Substratmaterialien wünschenswert. Zudem ist der XeF₂-Ätzvorgang ein Hochvakuumprozess, der sehr zeitintensiv ist (Ein- und Ausschleusen der Chips, Generation eines stabilen Vakuums usw.) und außerdem eine kostenintensive Infrastruktur voraussetzt. Darüber hinaus sind selbst große XeF₂-Ätzanlagen in ihrem Durchsatz sehr beschränkt, da die zu ätzenden Substrate eine gewisse Maximalgröße nicht überschreiten können.

XeF₂ selbst ist eine sehr kostspielige und hochkorrosive Chemikalie. Werden die optimalen Vakuumparameter beim Ätzvorgang nicht genau eingehalten oder sind in der Ätzkammer atmosphärische Verunreinigungen und/oder Restfeuchtigkeit vorhanden, bilden sich während des Ätzvorgangs störende organische Reaktionsnebenprodukte auf der Resonatoroberfläche. Diese sind in der weiteren Verwendung der Mikroresonatoren nachteilig, da beispielsweise eine nachfolgende Immobilisierung der für die Biosensorik zwingend benötigten Akzeptormoleküle an die Resonatoroberfläche nicht mehr reproduzierbar angewendet werden kann. Derartige Veränderungen lassen sich beispielsweise durch eine Veränderung des Wasserkontaktwinkels auf der Polymeroberfläche direkt nachweisen.

Das Ätzen mit XeF₂ ist somit für eine zeit- und kosteneffiziente sowie reproduzierbare Massenherstellung nicht tauglich. Jedoch ist die Unterätzung der Scheiben für die Herstellung der Resonatoren zwingend erforderlich, da erst hierdurch die Funktionalität des Bauteils als optisches Element ermöglicht wird. Als weiterer Nachteil kommt hinzu, dass es durch den XeF₂-Ätzvorgang bisher nicht möglich war, die Sockelhöhe unabhängig vom Sockeldurchmesser einzustellen oder vertikale Abfolgen von Sockeln und Resonatoren zu erzeugen.

Der vorliegenden Erfindung liegt somit die Aufgabe zugrunde, einen Mikroresonator bereitzustellen, welcher sich über ein Verfahren ohne XeF₂-Ätzvorgang herstellen lässt und somit bei der Auswahl des Substratmaterials nicht auf Silicium beschränkt ist, sowie ein Verfahren zur Herstellung dieses Mikroresonators.

Diese Aufgabe wird durch die in den Ansprüchen gekennzeichneten Ausführungsformen der vorliegenden Erfindung gelöst.

Insbesondere wird erfindungsgemäß ein Mikroresonator bereitgestellt, umfassend in dieser Reihenfolge ein Substrat, eine Zwischenschicht als Sockel und einen Resonator, wobei die Zwischenschicht ein organisches oder anorganisches Polymer umfasst.

Durch die Bereitstellung der spezifischen Zwischenschicht zwischen Resonator und Substratmaterial ist es vorteilhafterweise möglich, den erfindungsgemäßen Mikroresonator ohne einen XeF₂-Ätzvorgang bereitzustellen. Durch Vermeidung dieses Ätzvorgangs ist es vorteilhafterweise möglich, neben Silicium auch andere Materialien, beispielsweise transparente und/oder mechanisch flexible Materialien, als Substratmaterial für den erfindungsgemäßen Mikroresonator zu verwenden.

Erfindungsgemäß wird unter dem Begriff "Mikroresonator" eine geometrische Anordnung in einem Größenbereich von kleiner als 1 mm verstanden, die in dieser Reihenfolge ein Substrat, eine Zwischenschicht als Sockel und einen Resonator umfasst. Die Form des Resonators unterliegt erfindungsgemäß keiner besonderen Einschränkung. Der Resonator weist beispielsweise die Form eines Kelchs, einer Scheibe (Zylinder), eines Toroids, einer Spähre etc. auf, wie diese dem Fachmann als mögliche Resonatorformen bekannt sind. Gemäß einer bevorzugten Ausführungsform ist der Resonator in Kelchform.

Im erfindungsgemäßen Mikroresonator verbindet die Zwischenschicht als Sockel das Substrat mit dem Resonator. Die Zwischenschicht umfasst ein organisches oder anorganisches Polymer, welches selektiv zu den anderen Schichten, d.h. dem Substrat und dem Resonator, isotrop nasschemisch herauslösbar/ätzbar ist. Erfindungsgemäß wird unter dem Begriff "Polymer" jedes organische oder anorganische Polymer und Copolymer sowie Mischungen von Polymeren und/oder Copolymeren verstanden. Anorganische Polymere sind beispielsweise Polysilane, Polysiloxane, Polytitanate, Polygermanate, Polyzirkonate, Polysulfazene, Polyphosphate, Polyphosphazene Polybornitride etc.

Gemäß einer Ausführungsform umfasst die Zwischenschicht weiter Zusätze, die beispielsweise eine erhöhte Stabilität der Schicht oder weitere Funktionalitäten bedingen können. So kann beispielsweise durch Zugabe von magnetischen oder elektrisch leitfähigen Partikeln zum Zwischenschichtmaterial (Sockelmaterial) der Resonator elektrisch kontaktiert werden und durch das entstehende Magnetfeld bzw. elektrische Feld können geladene Partikel zum Resonator geleitet werden. Wird als Zwischenschichtmaterial ein Polymer bzw. Copolymer mit funktionellen chemischen Endgruppen verwendet, so kann vorteilhafterweise die Sockeloberfläche gezielt passiviert werden, so dass sich ausschließlich am Resonator selbst Moleküle anlagern können.

Die Zwischenschicht ist zudem bevorzugterweise aus einer Lösung prozessierbar und ist herstellungstechnisch kompatibel zum Resonatormaterial. Dies bedeutet, dass die Zwischenschicht unempfindlich sowohl gegenüber dem Lösemittel als auch dem Entwickler des Resonatormaterials ist. Zudem muss das Resonatormaterial auf der Zwischenschicht ausreichend haften und es darf keine nachteilige chemische Reaktion zwischen den Schichten stattfinden, insbesondere auch nicht bei Erwärmung der Gesamtstruktur über die Glasübergangstemperatur des Resonatormaterials. Vorzugsweise weist die Zwischenschicht eine höhere Glasübergangstemperatur auf als das Resonatormaterial, da dadurch ein Verziehen bzw. Kollabieren der Struktur des erfindungsgemäßen Mikroresonators bei Erwärmung vermieden werden kann. Gemäß einer besonders bevorzugten Ausführungsform weist die Zwischenschicht eine um mindestens 30 °C höhere Glasübergangstemperatur als das Resonatormaterial auf.

Gemäß einer bevorzugten Ausführungsform der vorliegenden Erfindung umfasst das Polymer der Zwischenschicht ein organisches Polymer. Gemäß einer besonders bevorzugten Ausführungsform der vorliegenden Erfindung ist das Polymer der Zwischenschicht Polydimethylglutarimid.

Die Dicke der Zwischenschicht unterliegt erfindungsgemäß keiner besonderen Einschränkung. Gemäß einer bevorzugten Ausführungsform weist die Zwischenschicht eine Dicke von 1 µm bis 1 mm auf, besonders bevorzugt von 5 µm bis 25 µm. Bei Zwischenschichtendicken kleiner als 1 µm wird der Abstand zwischen Substrat und dem lichtführenden Rand des Resonators so gering, dass es zum ungewollten Überkoppeln des Lichts aus dem Resonator ins Substrat kommen kann, wodurch sich die Resonatorgüte verschlechtern kann. Der Durchmesser des Sockels beträgt vorzugsweise von 10% bis 80% des Resonatordurchmessers, besonders bevorzugt von 33% bis 66%, da in diesen Bereichen insbesondere bei kelchförmigen Resonatoren eine ideale Kelchform bei gleichzeitig guter Stabilität erzielt wird.

Im erfindungsgemäßen Mikroresonator dient das Substrat als Träger der Zwischenschicht (Sockelschicht), auf welcher sich wiederum der Resonator befindet. Das Substrat unterliegt erfindungsgemäß keiner besonderen Einschränkung. Da der Sockel im erfindungsgemäßen Mikroresonator nicht wie im Stand der Technik aus Silicium besteht, sondern ein organisches oder anorganisches Polymer umfasst, ist im Herstellungsverfahren des erfindungsgemäßen Mikroresonators das Substratmaterial vorteilhafterweise nicht auf Silicium beschränkt, sondern das Substratmaterial kann frei gewählt werden, wodurch dieses bezogen auf die jeweilige Anwendung des Mikroresonators besonders günstige Eigenschaften aufweisen kann.

Als Substratmaterial können vorteilhafterweise ein biokompatibles Substrat und/oder im Vergleich zu Siliciumwafern billige und (mechanisch) flexible Folien, die ohne Partikelkontamination geschnitten und separiert werden können, verwendet werden. Erfindungsgemäß bedeutet der Begriff "biokompatibel", dass Bestandteile in einem Analyten, beispielsweise Biomoleküle, bei Kontakt mit dem Substrat nicht degradieren, d.h. ihre Form und/oder Funktionalität verändern, und somit nicht mehr von der Biofunktionalisierung der Resonatoroberfläche angebunden werden können. Biokompatible Polymersubstrate sind beispielsweise Polymethylmethacrylat, Polysulfon, Cyclo-Olefin-Copolymer etc. Weiterhin sind vorteilhafterweise transparente Substrate möglich, die ein optisches Addressieren und Auslesen der Resonatorstruktur durch das Substrat hindurch erlauben, sowie bereits vorstrukturierte Substrate. Erfindungsgemäß werden unter dem Begriff "vorstrukturierte Substrate" Substrate verstanden, die bereits in vorangehenden Prozessschritten (z. B. mittels Fräsen, Bohren, Fotolithografie, Ätzen, Abformung oder Bedampfung) vorstrukturiert wurden und eine Oberflächentopografie aufweisen. Da durch die Zwischenschicht das Substrat selbst nicht beim Ätzen des Sockels abgetragen wird, kann auf dem Substrat auch eine zuvor hergestellte elektrische, mikromechanische, mikrofluidische oder mikrooptische Struktur vorhanden sein. So lassen sich die Resonatoren beispielsweise auf Mikroelektronikchips, auf mikrooptischen Linsen oder in Mikrofluidikkanälen herstellen.

Gemäß einer Ausführungsform umfasst das Substrat Cyclo-Olefin-Copolymere und oder Polysulfon. Vorteilhaft sind weiterhin sämtliche transparente Materialien (transparente Polymere, Gläser etc.), da diese für Anregungs- und Emissionslicht transparent sind, und (mechanisch) flexible Materialien (beispielsweise Polymerfolien), da das Substrat dann verformt oder einer beliebigen Oberflächenform angepasst werden kann (beispielsweise Einbringen in Mikrofluidikstrukturen, Kanülen, Aufbringen auf anderen Geometrien etc.). Je nach Anwendung können aber auch Metallfolien für Anwendungen vorteilhaft sein. Besonders vorteilhaft sind "funktionale" Substrate, deren optische oder mechanische Eigenschaften sich während dem Betrieb gezielt variieren lassen, beispielsweise Formgedächtnismaterialien, deren Form sich beispielsweise über die Temperatur gezielt variieren lässt. Werden mindestens zwei Resonatoren in geringem Abstand auf einem Formgedächtnismaterial strukturiert, lässt sich der Abstand zwischen ihnen kontrolliert einstellen, so dass eine optische Kopplung realisiert werden kann. Die Kopplungseigenschaften lassen sich gezielt über den Abstand der Strukturen modifizieren.

Die Dicke des Substrats unterliegt erfindungsgemäß keiner besonderen Einschränkung. Das Substrat dient als Träger der Resonatoren und muss somit die nötige Stabilität bzw. Flexibilität gewährleisten. Diese ist material- und anwendungsabhängig. Gemäß einer bevorzugten Ausführungsform weist das Substrat eine Dicke von 1 µm bis 5 mm auf, besonders bevorzugt von 50 µm bis 1 mm. Für die verwendeten Polymersubstrate sollte die minimale Dicke beispielsweise von 50 bis 100 µm betragen, da die Folien sonst zerreißen könnten. Mit zunehmender Dicke wird das Substrat allerdings schwerer und teurer und bei transparenten Substraten steigt zusätzlich die Absorption. Daher sollte die vorstehende maximale Substratdicke nicht überschritten werden.

Der Resonator des erfindungsgemäßen Mikroresonators unterliegt keiner besonderen Einschränkung und als Resonatormaterial kann jedes Material verwendet werden, das dem Fachmann als geeignetes Material für die Herstellung eines Resonators von Mikrokelchresonatoren bekannt ist. Der Resonator kann eine beliebige Form aufweisen (beispielsweise Kelch, Scheibe, Sphäre, Toroid). Geeignete Materialien sind im verwendeten Spektralbereich transparent, weisen eine geringe optische Dämpfung auf und besitzen einen Brechungsindex, der oberhalb der des Umgebungsmediums liegt, um die Voraussetzung für Totalreflexion zu erfüllen. Mögliche Materialien sind beispielsweise Fotolacke wie SU-8, Ormocere, und/oder PMMA-basierte Copolymere. Gemäß einer bevorzugten Ausführungsform der vorliegenden Erfindung umfasst das Material, aus welchem der Resonator gebildet ist ("Resonatormaterial"), ein Polymer bzw. ein Copolymer. Vorteilhafterweise kann bei der Verwendung eines Polymers bzw. Copolymers als Resonatormaterial eine erweiterte Funktionalität in die Polymermatrix eingebracht werden, beispielsweise in Form einer Dotierung mit einem Laserfarbstoff. Gemäß einer besonders bevorzugten Ausführungsform umfasst das Resonatormaterial Polymethylmethacrylat (PMMA), gegebenenfalls als Copolymer mit einem 5 bis 10 Gew.-% Anteil an beispielsweise Methacrylsäure oder Polyglycidylmethacrylat. PMMA bietet vorteilhafterweise neben sehr guten optischen Eigenschaften niedrige Materialkosten und ist durch massenproduktionstaugliche Prozessschritte bei vergleichsweise niedrigen Temperaturen verarbeitbar. Zudem ist PMMA auf einer Nanometerskala strukturierbar und kann mit herkömmlichen Heißprägeverfahren verarbeitet werden.

Gemäß einer bevorzugten Ausführungsform der vorliegenden Erfindung sind die Materialien der Zwischenschicht und des Resonators voneinander unterschiedlich, so dass im Herstellungsverfahren des erfindungsgemäßen Mikroresonators als optionaler letzter Herstellungsschritt ein thermischer Reflow-Schritt möglich ist, durch welchen Oberflächendefekte reduziert werden können. Dadurch lassen sich vorteilhafterweise Resonatoren mit besonders hohen Gütefaktoren bereitstellen, die insbesondere in der Biosensorik verwendet werden können. Bei Vorliegen eines Mikroresonators, dessen Substrat, Zwischenschicht und Resonator ausschließlich aus Polymeren und Copolymeren gebildet sind, spricht man von einem vollpolymeren Mikroresonator.

Die Dicke des Resonators, d.h. die räumliche Ausdehnung des Resonators von seiner Unterseite, welche mit der Zwischenschicht in Kontakt tritt, bis zu der Oberseite des Resonators, unterliegt erfindungsgemäß keiner besonderen Einschränkung. Gemäß einer bevorzugten Ausführungsform weist der Resonator eine Dicke von 100 nm bis 5 µm auf, besonders bevorzugt von 800 nm bis 2 µm. Bei Resonatoren mit einer Dicke von kleiner als 100 nm besteht die Gefahr, dass die Resonatoren beim Unterätzen bzw. beim anschließenden Reflow koltabieren.

Der Durchmesser des Resonators unterliegt erfindungsgemäß keiner besonderen Einschränkung. Beispielsweise weist der Resonator einen Durchmesser von 5 µm bis 1 mm auf, bevorzugt von 20 µm bis 100 µm.

Gemäß einer Ausführungsform der vorliegenden Erfindung weist der Mikroresonator zwei oder mehr Zwischenschichten und zwei oder mehr Resonatoren auf, wobei die Zwischenschichten und Resonatoren abwechselnd übereinander angeordnet sind, d.h. eine vertikal gestapelte Abfolge von Resonatoren und Zwischenschichten (Zwischensockeln) vorliegt. Die Anzahl dieser Schichtpaare kann beispielsweise von 2 bis 10 betragen. Die vorstehende Ausführungsform kann dadurch vertikal koppelnde Resonatorstrukturen aufweisen, die vorteilhafterweise durch den Vernier-Effekt die Erzeugung von hochsensitiven Biosensoren bzw. Lasern mit einer einzelnen Emissionswellenlänge erlauben. Durch eine frei wählbare Abfolge von unterschiedlichen Polymeren bzw. Copolymeren in einer derartigen Struktur als lichtführende Schichten (Resonatoren), die in einem Biosensorikexperiment unterschiedliche Funktionalisierungen aufweisen können, lässt sich vorteilhafterweise eine große Anzahl von Sensor- und Referenzelementen äußerst kompakt und mit hoher Bauteildichte realisieren.

Gemäß einer Ausführungsform der vorliegenden Erfindung sind auf dem Substrat mehrere erfindungsgemäße Mikroresonatoren zur Bildung eines (großflächigen) Arrays angeordnet.

Ein weiterer Aspekt der vorliegenden Erfindung betrifft ein Verfahren zur Herstellung des erfindungsgemäßen Mikroresonators, umfassend die Schritte:
(a) Bereitstellen eines Substrats;
(b) Aufbringen eines Zwischenschichtmaterials auf das Substrat, wobei das Zwischenschichtmaterial ein organisches oder anorganisches Polymer umfasst;
(c) Aufbringen eines scheibenförmigen Resonators auf das Zwischenschichtmaterial; und
(d) selektives Herauslösen/Ätzen des Zwischenschichtmaterials zum Bilden eines Sockels und zum Erhalt des Mikroresonators.

Sämtliche vorstehende Ausführungsformen, betreffend den erfindungsgemäßen Mikroresonator, treffen auch auf das erfindungsgemäße Verfahren zur Herstellung des Mikroresonators zu.

Im Schritt (a) des erfindungsgemäßen Verfahrens wird ein Substrat bereitgestellt, wobei vorteilhafterweise aufgrund der nachfolgenden Verfahrensschritte das Substrat aus einem beliebigen Material bestehen kann. Vorteilhafterweise sind auch die Fabrikationsparameter der nachfolgenden Verfahrensschritte substratunabhängig, so dass eine Anpassung der Herstellung an ein gegebenes Substratmaterial entfällt.

Im Schritt (b) des erfindungsgemäßen Verfahrens wird ein Zwischenschichtmaterial auf das Substrat aufgebracht, wobei das Zwischenschichtmaterial ein organisches oder anorganisches Polymer umfasst. Das Zwischenschichtmaterial kann mit jedem dem Fachmann bekannten Aufbringungsverfahren aufgebracht werden. Die Dicke des Zwischenschichtmaterials, welche später dann der Dicke der Zwischenschicht als Sockel entspricht, kann dabei frei gewählt und auf die gewünschte spätere Anwendung angepasst werden. Gemäß einer Ausführungsform der vorliegenden Erfindung wird das Zwischenschichtmaterial mittels Schleuderbelackung (Spin-Coating) aufgebracht.

Im Schritt (c) des erfindungsgemäßen Verfahrens wird ein scheibenförmiger Resonator auf das Zwischenschichtmaterial aufgebracht. Der Resonator kann mit jedem dem Fachmann bekannten Aufbringungsverfahren aufgebracht werden.

Gemäß einer Ausführungsform des erfindungsgemäßen Verfahrens umfasst der Schritt (c) die folgenden Schritte:
(c1) Aufbringen eines Resonatormaterials auf das Zwischenschichtmaterial;
(c2) lithographisches Strukturieren des aufgebrachten Resonatormaterials in Scheiben; und
(c3) Entwickeln des lithographisch strukturierten Resonatormaterials.

Im Schritt (c1) wird ein Resonatormaterial auf das Zwischenschichtmaterial aufgebracht. Das Resonatormaterial kann mit jedem dem Fachmann bekannten Aufbringungsverfahren aufgebracht werden. Gemäß einer Ausführungsform der vorliegenden Erfindung wird das Resonatormaterial im Schritt (c1) mittels Schleuderbelackung (Spin-Coating) aufgebracht.

Im Schritt (c2) wird das aufgebrachte Resonatormaterial lithographisch in Scheiben strukturiert. Das Resonatormaterial kann mit jedem dem Fachmann bekannten lithographischen Verfahren strukturiert werden. Gemäß einer Ausführungsform wird das Resonatormaterial mittels Elektronenstrahllithographie strukturiert. Gemäß einer alternativen Ausführungsform wird das Resonatormaterial durch DUV-Lithographie strukturiert, wodurch sich vorteilhafterweise große Stückzahlen an Resonatoren in einem parallelen Herstellungsverfahren fertigen lassen.

Im Schritt (c3) wird das lithographisch strukturierte Resonatormaterial entwickelt. Die Entwicklung erfolgt dabei durch dem Fachmann bekannte Verfahren, beispielsweise durch einen nasschemischen Prozessschritt.

Gemäß einer alternativen Ausführungsform umfasst der Schritt (c) den Schritt (c4) Stempeltransfer des Resonators auf das Zwischenschichtmaterial. Hierbei wird der Resonator mittels eines Stempels auf das Zwischenschichtmaterial bereits in Scheibenform aufgetragen, so dass ein nachfolgender Entwicklungsschritt wie der vorstehend beschriebene Schritt (c3) entfallen kann. Insbesondere für eine industrielle Herstellung großer Stückzahlen ist ein Stempeltransferverfahren sehr vorteilhaft, da es eine sehr großflächige und kostengünstige Herstellung ermöglicht. Für den Übertrag wird beispielsweise ein Stempel verwendet, auf dessen Oberfläche Erhebungen in Form der Resonatoren aufgebracht sind. Die Oberflächenenergie des Stempels kann durch eine Antihaftbeschichtung, beispielsweise aus perfluorierten Polymeren wie Teflon, so verringert werden, dass das darauf abgeschiedene Resonatormaterial nur leicht auf der Stempeloberfläche haftet. Wird der Stempel in Kontakt mit einem Substrat mit höherer Oberflächenenergie gebracht, dann wird das Resonatormaterial auf den erhabenen Stempelflächen auf das Substrat übertragen. Vorteilhafterweise erhält man so ohne lithografische Strukturierung und Entwicklung auf dem Substrat scheibenförmige Resonatoren. Die anschließende Prozessierung der Zwischenschicht und der optionale Reflowprozess können unverändert bleiben.

Im Schritt (d) des erfindungsgemäßen Verfahrens wird das Zwischenschichtmaterial selektiv herausgelöst/geätzt, um einen Sockel zu bilden. Vorzugsweise erfolgt dieser Schritt als nasschemische isotrope Ätzung, bei der das Resonatormaterial teilweise unterätzt wird, so dass die verbliebene Zwischenschicht anschließend den Sockel zwischen Substrat und Resonator bildet. Die Ätzung in Schritt (d) wird derart durchgeführt, dass mindestens der Rand der Resonatorscheibe freiliegt, so dass die optischen Moden im Resonator, die entlang des äußeren Randes umlaufen, nicht mit dem Sockel wechselwirken und durch diesen gedämpft werden. Schritt (d) unterliegt keiner weiteren Einschränkung und dem Fachmann sind die notwendigen Verfahrensparameter (Ätz-Chemikalien, Ätzungsdauer etc.) zur nasschemischen Ätzung je nach verwendetem Zwischenschichtmaterial bekannt.

Gemäß einer Ausführungsform umfasst das Verfahren weiter den Schritt (e) thermisches Behandeln des in den Schritten (a) bis (d) entstandenen Mikroresonators zur Verringerung von Oberflächendefekten. Durch den optionalen Schritt (e) kann zudem gemäß einer Ausführungsform ein oberflächendefektreduzierter Mikrokelchresonators erhalten werden.

Im optionalen Schritt (e) des Verfahrens wird die in den Schritten (a) bis (d) gefertigte/entstandene Struktur thermisch behandelt, um eine Verminderung nachteiliger Oberflächenrauhigkeiten zu erreichen. Weiterhin bildet sich gemäß einer Ausführungsform der vorliegenden Erfindung aufgrund der Verringerung der Oberflächenenergie die charakteristische Kelchform der Resonatoren aus. Gemäß einer Ausführungsform wird die thermische Behandlung für eine Dauer von 1 s bis 1 h durchgeführt, vorzugsweise von 5 s bis 1 min. Bei einer zu kurzen Dauer besteht die Gefahr, dass die Zeit zum gleichmäßigen Aufheizen des Substrats nicht ausreicht und der Reflowprozess nicht gestartet bzw. nicht vollständig abgeschlossen wird. Bei einer zu langen Dauer besteht die Gefahr, dass potentiell vorhandene, temperaturempfindliche Laserfarbstoffe im Resonatormaterial und/oder die chemischen Endgruppen gegebenenfalls verwendeter funktionaler Copolymere zur Oberflächenfunktionalisierung degradieren. Vorzugsweise wird die thermische Behandlung bei Temperaturen von 110 °C bis 180 °C durchgeführt, besonders bevorzugt von 125 bis 140 °C. Gemäß einer bevorzugten Ausführungsform liegt die Temperatur ungefähr 10 bis 30 °C oberhalb der Glasübergangstemperatur des Resonatormaterials. Wird beispielsweise PMMA als Resonatormaterial verwendet (Glasübergangstemperatur ca. 110 °C), so erfolgt der Reflow bevorzugt bei von 125 bis 140 °C. Für Copolymere mit einer höheren oder niedrigeren Glasübergangstemperatur muss die Reflowtemperatur entsprechend erhöht oder verringert werden. Tendenziell sollte die Reflowtemperatur also ungefähr von 10 bis 30 °C oberhalb der Glasübergangstemperatur liegen. Erfindungsgemäß wird die vorstehende Temperatur für die thermische Behandlung als die Temperatur definiert, welche die Heizplatte oder der Ofen aufweist, auf/in der/dem das Substrat erwärmt wird.

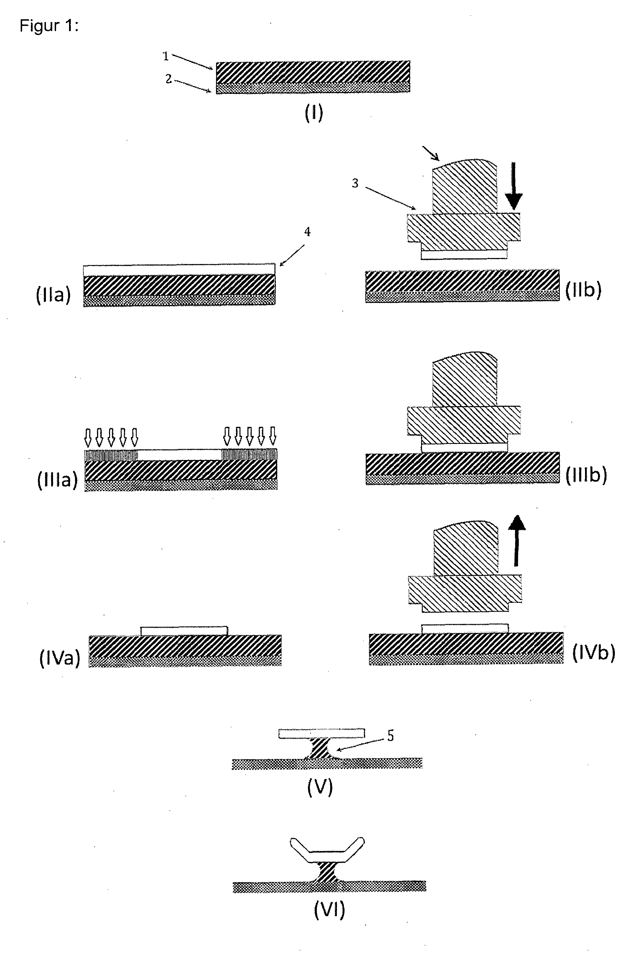

Figur 1 zeigt schematisch die Reihenfolge der einzelnen Verfahrensschritte im erfindungsgemäßen Verfahren zur Herstellung eines erfindungsgemäßen Mikroresonators, wobei die vorstehend beschriebenen Varianten des Schritts (c) aufgezeigt sind (I. Aufschleudern des Zwischenschichtmaterials; IIa. Aufschleudern des Resonatormaterials bzw. IIb. Stempelbeschichtung; IIIa. Strukturierung über UV oder Elektronenstrahlschreiber bzw. IIIb. Stempelübertrag; IVa. Entwicklung des Resonatormaterials bzw. IVb. Stempeltrennung; V. selektives Herauslösen/Ätzen des Zwischenschichtmaterials; VI. thermische Behandlung).

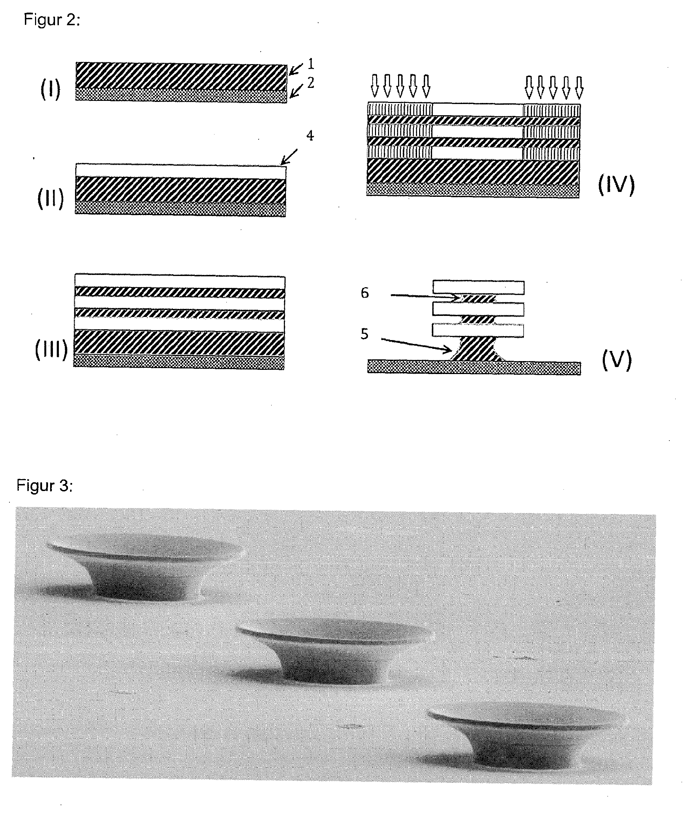

Gemäß einer Ausführungsform des erfindungsgemäßen Verfahrens werden die Schritte (b) und (c) mehrmals abwechselnd hintereinander durchgeführt. Hierdurch kann vorteilhafterweise eine Abfolge von Mikroresonatoren bereitgestellt werden, die zwei oder mehr Zwischenschichten und zwei oder mehr Resonatoren aufweist. Umfasst der Schritt (c) des erfindungsgemäßen Verfahrens die Schritte (c1), (c2) und (c3), so wird vorzugsweise der Schritt (c3) erst durchgeführt, wenn sämtliche Zwischenschichten und Resonatorschichten aufgebracht sind. Figur 2 zeigt schematisch die Reihenfolge der einzelnen Verfahrensschritte im erfindungsgemäßen Verfahren zur Herstellung einer Abfolge von Mikroresonatoren mit vertikal gestapelten Schichten (I. Aufschleudern des Zwischenschichtmaterials; II. Aufschleudern des Resonatormaterials; III. Wiederholtes Aufschleudern von Zwischenschichtmaterial und Resonatormaterial; IV. Strukturierung über UV oder Elektronenstrahlschreiber; V. selektives Herauslösen/Ätzen des Zwischenschichtmaterials).

Durch den nasschemischen Schritt (d) des erfindungsgemäßen Verfahrens kann die chemische Funktionalität der Resonatoroberfläche reproduzierbar sichergestellt werden. Dies ist zwingend notwendig für eine Verwendung des Mikroresonators der vorliegenden Erfindung als Biosensor, die eine nachfolgende chemische Funktionalisierung der Resonatoroberfläche voraussetzt. Durch das erfindungsgemäße Verfahren ist weiterhin eine flexible und sehr gut reproduzierbare Kontrolle der Sockelhöhe bzw. des Sockeldurchmessers möglich, insbesondere da Sockelhöhe und -durchmesser unabhängig voneinander variabel einstellbar sind. Höhe und Durchmesser des Sockels können vorteilhafterweise durch Kontrolle der aufgebrachten Zwischenschicht bzw. der Dauer des nasschemischen Unterätzung eingestellt werden. Dies ist insbesondere für die Integration des Mikroresonators in eine Lab-on-a-Chip-Umgebung essentiell und war durch das bisher bekannte Verfahren mit XeF₂-Ätzvorgang, bei dem Sockelhöhe und -durchmesser nicht voneinander unabhängig variabel sind, nicht erreichbar.

Ein weiterer Aspekt der vorliegenden Erfindung betrifft die Verwendung des erfindungsgemäßen Mikroresonators bzw. den über das erfindungsgemäße Verfahren hergestellten Mikroresonator bzw. des Arrays aus erfindungsgemäßen Mikroresonatoren als Mikrolaser und/oder molekularer Sensor. So kann der erfindungsgemäße Mikroresonator beispielsweise in der Analyse von Blutserum bzw. -plasma, Urin, Speichel und/oder anderen Körperflüssigkeiten zur Krankheitsdiagnose verwendet werden. Aufgrund seiner kostengünstigen Herstellungsweise ist der erfindungsgemäße Mikroresonator hierfür besonders geeignet, da Anwendungen in der Biosensorik bevorzugt Analysechips erfordern, welche aufgrund möglicher Kontamination während der Analyse oder aus hygienischen Gründen als Einwegkomponenten verwendet werden sollten.

In der vorliegenden Erfindung wird durch Einführen einer Zwischenschicht als Sockel zwischen Resonator und Substrat vorteilhafterweise auf einen XeF₂-Ätzvorgang verzichtet und erstmalig der für den lichtführenden Resonator notwendige Sockel über ein nasschemisches Verfahren realisiert werden. Das erfindungsgemäße Verfahren stellt daher zum einen eine signifikante Vereinfachung des Herstellungsprozesses dar und ermöglicht es zudem auch Mikroresonatoren bereitzustellen, bei denen das Substratmaterial frei ausgewählt und individuell auf die jeweilige gewünschte Anwendung angepasst werden kann. Dadurch ist es im erfindungsgemäßen Mikroresonator vorteilhafterweise möglich, beispielsweise transparente und/oder mechanisch flexible Materialien und/oder vorstrukturierte Substrate zu verwenden. Zudem können vorteilhafterweise vertikal gestapelte Resonatorschichten mit einer variablen Schichtenfolge in einstellbaren Abständen zwischen den Schichten bereitgestellt werden, die bei Verwendung von unterschiedlichen Polymeren und/oder Copolymeren dann schichtselektiv unterschiedliche Biofunktionalisierungen aufweisen können.

Durch Vermeidung des XeF₂-Ätzvorgangs benötigt das erfindungsgemäße Verfahren im Gegensatz zu den bisher bekannten Verfahren keinen Prozessschritt im Hochvakuum. Die damit vorteilhafterweise einhergehende Vereinfachung des Herstellungsverfahrens führt zu einer Unabhängigkeit des Verfahrens gegenüber jeglicher Art des Substrats, der Substratgröße und der Substratform. Zudem wird die Verwendung und Entstehung von hochtoxischen Chemikalien vermieden und der zeitliche und apparative Aufwand der Herstellung erheblich reduziert.

Das erfindungsgemäße Verfahren erlaubt vorteilhafterweise eine großtechnische Herstellung und insbesondere bei Verwendung eines flexiblen Substratmaterials die Fertigung der Strukturen mit etablierten Druckverfahren, beispielsweise UV-Nanoimprinting, Rolle-zu-Rolle-Herstellungsprozesse (UV- und nicht-UV-unterstützt, Aufdampfen, Verwendung der Rolle als Abformwerkzeug, Verwendung einer zweiten Folie als Abformwerkzeug etc.), Stempeltransfertechniken (beispielsweise Microcontactprinting) und abformende Prozesse wie beispielsweise Heißprägen, Replica-Molding, Microtransfer-Molding, Cappillary-Micromolding in etc.

Aufgrund der vorstehenden Vorteile und Besonderheiten des erfindungsgemäßen Mikroresonators bzw. des erfindungsgemäßen Verfahrens zur Herstellung dieser Mikroresonatoren sind die Mikroresonatoren der vorliegenden Erfindung vorteilhafterweise insbesondere zur Detektion kleinster Viren- und Partikelkonzentrationen bis hin zur Detektion einzelner Moleküle in einer Vielzahl von Anwendungen in der Medizin, Pharmazie, Biologie und Chemie hervorragend verwendbar.

Die Figuren zeigen:
Figur 1 zeigt schematisch die Reihenfolge der einzelnen Verfahrensschritte im erfindungsgemäßen Verfahren zur Herstellung eines Mikroresonators.
Figur 2 zeigt schematisch die Reihenfolge der einzelnen Verfahrensschritte im erfindungsgemäßen Verfahren zur Herstellung einer Abfolge von Mikroresonatoren mit vertikal gestapelten Schichten.
Figur 3 zeigt eine Rasterelektronenmikroskop-Aufnahme eines Arrays aus drei erfindungsgemäßen Mikrokelchresonatoren.
Figur 4 zeigt die Laserkennlinie eines farbstoffdotierten erfindungsgemäßen Mikrokelchlasers auf einem Sockel aus Polymer.
Figur 5 zeigt eine Lichtbildmikroskopaufnahme eines erfindungsgemäßen Mikrokelchlasers während der optischen Anregung mittels Pumplaser.

Die vorliegende Erfindung wird anhand der folgenden, nicht einschränkenden Beispiele näher erläutert.

### Herstellungsbeispiel 1:

Auf einen Siliciumwafer als Substrat wurde das kommerziell erhältliche Polymer LOR 30B (Firma Microchem) auf Basis von Polydimethylglutarimid mittels Aufschleudern als Zwischenschichtmaterial in einer Schichtdicke von 5 µm aufgebracht. Anschließend wurde die Struktur für 5 bis 30 min bei 180 °C getempert. Um Blasenbildung zu vermeiden wurde die Temperatur innerhalb von 5 bis 90 min kontinuierlich von Raumtemperatur auf 180 °C erhöht. Danach wurde eine 1,2 µm dicke Schicht PMMA 950k (Firma Microchem) auf das Zwischenschichtmaterial mittels Aufschleudern als Resonatormaterial aufgebracht und die Struktur bei einer Anheizdauer von 5 min bei 110 °C getempert. Zur lithographischen Strukturierung von Scheiben mit 50 µm Durchmesser in die PMMA-Schicht (Resonatormaterial) wurde Elektronenstrahllithographie verwendet. Das belichtete PMMA wurde selektiv mit einer Mischung aus Methylisobutylketon und Isopropanol (Mischungsverhältnis 1:1) entwickelt. Zur selektiven Ätzung der LOR-Schicht (Zwischenschichtmaterial) wurde ein Entwickler auf Basis von Tetramethylammoniumhydroxid (101 A Developer der Firma Microchem) verwendet. Die Ätzdauer wurde so eingestellt, dass die PMMA Scheiben zur Hälfte unterschnitten sind, d.h. zwischen 30 und 60 min. Zum thermischen Reflow der Resonatoren wurde anschließend die erhaltende Struktur auf einer Heizplatte für 30 s auf 130 °C erhitzt. Hierbei entstand die Kelchform der Resonatoren.

Figur 3 zeigt drei derart hergestellten Mikrokelchresonatoren. Die Kelchform ist bedingt durch den thermischen Reflow-Prozess sehr homogen und der Sockeldurchmesser der Mikrokelchresonatoren ist kontrolliert einstellbar.

### Herstellungsbeispiele 2 und 3:

Analog zum Herstellungsbeispiel 1 wurden Mikrokelchresonatoren hergestellt, wobei anstelle des Siliciumwafers Polymerfolien mit 200 bis 350 µm Dicke aus Cyclo-Olefin-Copolymer (COC; Herstellungsbeispiel 2) und Polysulfon (PSU; Herstellungsbeispiel 3) als Substrate verwendet wurden. Bis auf eine geringe Erhöhung der Reflow-Temperatur von 130 °C auf 135 °C aufgrund der geringeren Wärmeleitfähigkeit der verwendeten Substratmaterialien wurden identische Verfahrensparameter wie im Herstellungsbeispiel 1 verwendet.

Mit beiden Substratmaterialien konnten erfolgreich Mikrokelchresonatoren hergestellt werden. Dies zeigt deutlich, dass das erfindungsgemäße Herstellungsverfahren unabhängig vom verwendeten Substratmaterial ist.

### Herstellungsbeispiel 4:

Zur Herstellung gestapelter Resonatoren wurden die ersten beiden Schritte des Herstellungsbeispiels 1, also das Aufschleudern von LOR Resist und PMMA, mehrmals hintereinander wiederholt. Anschließend wurde in einem Schritt der photosensitive Resist belichtet und die Gesamtstruktur durch eine Abfolge von Entwicklungsschritten erzeugt.

### Testbeispiel 1:

Die optischen Eigenschaften der Kelchresonatoren wurden an einem Messplatz für Laserkennlinien charakterisiert. Zu diesem Zweck wurde dem PMMA vor der Herstellung der Mikrokelchresonatoren der Laserfarbstoff Pyrromethen 597 beigemischt, so dass die Kelche als Mikrolaser fungieren.

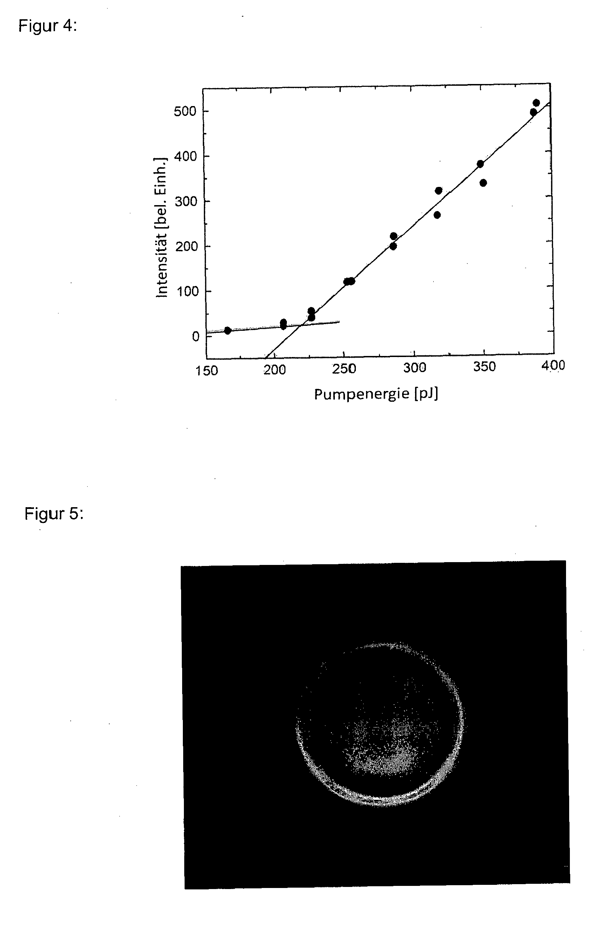

Figuren 4 und 5 zeigen die Laserkennlinie eines Resonators auf einem Sockel (Zwischenschicht) aus Lift-Off Resist 30B (Firma Microchem), welcher auf Polydimethylglutarimid basiert, und eine Lichtmikroskopieaufnahme des Mikrokelchlasers während der optischen Anregung mittels Pumplaser. Die Laserschwelle beträgt ca. 220 pJ pro Anlegepuls und liegt damit im gleichen Bereich wie die Laserschwelle von Kelchlasern auf einem Siliciumsockel. Die Herstellung von Mikrokelchresonatoren auf Polymersockeln beeinflusst somit nicht die optische Güte der Resonatoren.

### Testbeispiel 2:

Die auf den Polymersubstraten aus PSU und COC hergestellten Kelchlaser der Herstellungsbeispiele 2 und 3 konnten erfolgreich durch das transparente Substrat hindurch optisch gepumpt und ausgelesen werden. Dies ermöglicht es vorteilhafterweise, für Anwendungen in der Biosensorik die optische Adressierung örtlich getrennt von der fluidischen Adressierung vorzunehmen. So kann beispielsweise die fluidische Zuführung des Analyts auf der Chipvorderseite erfolgen, während die optische Adressierung von der Chiprückseite aus erfolgt.

### Bezugszeichenliste

- 1: Zwischenschichtmaterial
- 2: Substrat
- 3: Stempel
- 4: Resonatormaterial
- 5: isotrop unterätzter Sockel zwischen Resonator und Substrat
- 6: isotrop geätzter Sockel zwischen zwei lichtführenden Schichten

## Patentansprüche

1. Mikroresonator, umfassend in dieser Reihenfolge ein Substrat, eine Zwischenschicht als Sockel und einen Resonator, wobei die Zwischenschicht ein organisches oder anorganisches Polymer umfasst.

2. Mikroresonator nach Anspruch 1, wobei die Glasübergangstemperatur des Polymers höher ist als die des Materials des Resonators.

3. Mikroresonator nach Anspruch 1 oder 2, wobei das Polymer Polydimethylglutarimid ist.

4. Mikroresonator nach einem der Ansprüche 1 bis 3, wobei die Zwischenschicht eine Dicke von 1 µm bis 1 mm aufweist.

5. Mikroresonator nach einem der Ansprüche 1 bis 4, wobei das Substrat transparent und/oder biokompatibel und/oder mechanisch flexibel ist.

6. Mikroresonator nach einem der Ansprüche 1 bis 5, wobei das Substrat Cyclo-Olefin-Copolymere und/oder Polysulfon und/oder ein Glas umfasst.

7. Mikroresonator nach einem der Ansprüche 1 bis 6, wobei der Mikroresonator zwei oder mehr Zwischenschichten und zwei oder mehr Resonatoren aufweist, wobei die Zwischenschichten und Resonatoren abwechselnd übereinander angeordnet sind.

8. Verfahren zur Herstellung eines Mikroresonators nach einem der Ansprüche 1 bis 7, umfassend die Schritte:
(a) Bereitstellen eines Substrats;
(b) Aufbringen eines Zwischenschichtmaterials auf das Substrat, wobei das Zwischenschichtmaterial ein organisches oder anorganisches Polymer umfasst;
(c) Aufbringen eines scheibenförmigen Resonators auf das Zwischenschichtmaterial; und
(d) selektives Herauslösen und/oder Ätzen des Zwischenschichtmaterials zum Bilden eines Sockels und zum Erhalt des Mikroresonators.

9. Verfahren nach Anspruch 8, weiter umfassend den Schritt (e) thermisches Behandeln des in den Schritten (a) bis (d) entstandenen Mikroresonators zur Verringerung von Oberflächendefekten.

10. Verfahren nach Anspruch 8 oder 9, wobei die Schritte (b) und (c) mehrmals abwechselnd hintereinander durchgeführt werden.

11. Verfahren nach einem der Ansprüche 8 bis 10, wobei der Schritt (c) die folgenden Schritte umfasst:
(c1) Aufbringen eines Resonatormaterials auf das Zwischenschichtmaterial;
(c2) lithographisches Strukturieren des aufgebrachten Resonatormaterials in Scheiben; und
(c3) Entwickeln des lithographisch strukturierten Resonatormaterials.

12. Verfahren nach einem der Ansprüche 8 bis 10, wobei der Schritt (c) den folgenden Schritt umfasst:
(c4) Stempeltransfer des Resonators auf das Zwischenschichtmaterial.

13. Verwendung des Mikroresonators nach einem der Ansprüche 1 bis 7 bzw. eines Arrays von Mikroresonatoren nach einem der Ansprüche 1 bis 7 als Mikrolaser und/oder molekularer Sensor.
